Europäisches Patentamt

European Patent Office

Office européen des brevets

(11) Publication number: **0 350 325**
**A2**

## (12) EUROPEAN PATENT APPLICATION

(21) Application number: **89306925.2**

(22) Date of filing: **07.07.89**

(51) Int. Cl.⁵: **B 60 R 25/04**

(30) Priority: **07.07.88 GB 8816159**

(43) Date of publication of application:
**10.01.90 Bulletin 90/02**

(84) Designated Contracting States: **DE ES FR GB IT**

(71) Applicant: **GOULDITAR NO. 18 LIMITED**
**22 Tudor Street**
**London EC4 (GB)**

(72) Inventor: **Magrobi, Brian**
**200 Brabanzon Avenue, Mondeor**
**Johannesburg 2091 (ZA)**

**Losinsky, Brain**
**24, Eden Road, Bramley**
**Johannesburg (ZA)**

(74) Representative: **Bridge-Butler, Alan James et al**
**G.F. REDFERN & CO. High Holborn House 52/54 High Holborn**
**London WC1V 6RL (GB)**

(54) **Motor vehicle anti-theft device.**

㊗ A motor vehicle anti-theft device comprising a lockable container adapted to contain the battery of the motor vehicle and to be fixed to the vehicle; first and second auxiliary connector means accessible from the exterior of the container; a first lead for connecting the positive terminal of the battery to the first auxiliary connector means; controllable switch means; a second lead for connecting the negative terminal of the battery via the switch means to the second auxiliary connector means, so that electrical continuity between the negative terminal of the battery and the second auxiliary connector means can be controlled by the switch means; and a control circuit arranged to be powered by the battery and responsive to signais from control means external to the container to control the switch means selectively to enable or disable operation of the vehicle.

EP 0 350 325 A2

Description

## BACKGROUND OF THE INVENTION

This invention relates to a motor vehicle anti-theft device.

Motor vehicle anti-theft devices which interrupt one or more electrical circuits of a motor vehicle in order to disable it, are well known. Typically, the primary ignition coil circuit of the vehicle is interrupted by means of a relay controlled by the anti-theft device. Alternatively, an electric fuel pump can be disabled, or solenoid-controlled valves may be used to inhibit operation of the vehicle braking system, fuel line or other vital systems.

Known systems are disruptive in the sense that they require to be inserted into the existing vehicle electrical system when they are installed. Usually, a considerable amount of expertise is required to ensure proper fitting, and the possibility exists of existing wiring or other equipment being damaged. A major disadvantage of known systems is that they are generally accessible to a thief, even if their presence is disguised, which allows them to be located and bypassed, or disabled by a moderately skilled thief. Even the most sophisticated known systems can generally be disabled or otherwise overcome by a thief who has a specialized knowledge of how the system works, such as a person who has been employed by an installer of the anti-theft device. This, unfortunately, is a possibility which cannot be discounted.

## SUMMARY OF THE INVENTION

According to the invention a motor vehicle anti-theft device comprises a lockable container adapted to contain the battery of the motor vehicle and to be fixed to the vehicle; first and second auxiliary connector means accessible from the exterior of the container; a first lead for connecting the positive terminal of the battery to the first auxiliary connector means; controllable switch means; a second lead for connecting the negative terminal of the battery via the switch means to the second auxiliary connector means, so that electrical continuity between the negative terminal of the battery and the second auxiliary connector means can be controlled by the switch means; and a control circuit arranged to be powered by the battery and responsive to signals from control means external to the container to control the switch means selectively to enable or disable operation of the vehicle.

The device may include polarity reversal means for connecting the positive terminal of the battery to the second auxiliary connector means when the negative terminal of the battery is disconnected therefrom.

The second auxiliary connector means is preferably connected electrically to the chassis of the vehicle via the container itself, which has at least a portion which is electrically conductive and which is connected electrically to both the chassis of the vehicle and to the second auxiliary connector means.

The container is preferably made of a tough metallic material such as steel, and is provided with a lockable panel.

An alarm sensor may be located within the container to detect unauthorised attempts to open it, and an audible alarm device such as a siren or hooter may be located within the container and arranged to be actuated by such an attempt, the alarm device being powered by the vehicle battery and a path being defined by the container to allow sound generated by the alarm device to escape from the container.

The container may house the circuitry of a burglar alarm, anti-hijacking device, or a further vehicle immobilising device, each of which is arranged to be powered by the vehicle battery.

A third lead may be provided inside the container which is adapted to connect the negative terminal of the battery to the second auxiliary connector means directly, bypassing the switch means, in the event of a failure of the anti-theft device.

Figure 1 is a diagrammatic view of a motor vehicle incorporating an anti-theft device of the invention,

Figure 2 is a detail section through the container of the device,

Figure 3 is a schematic plan view of the interior of the container showing the anti-theft device,

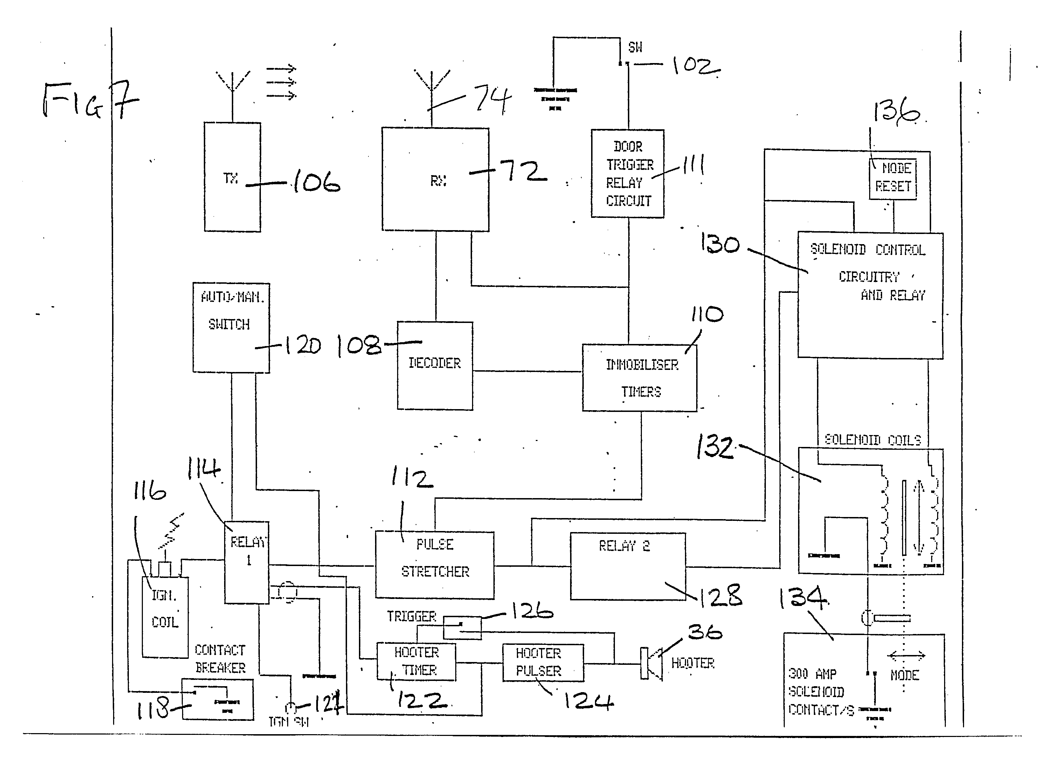

Figures 4 and 5 are pictorial view of the container,

Figure 6 shows a locking device for the container,

Figure 7 is a block diagram of the device,

Figure 8 is a schematic block diagram of the electrical circuitry of the anti-theft device, and

Figures 9 to 12 are schematic circuit diagrams of the electronic circuitry of the device,

Figure 13 is a transverse section through container below the lid to show a modified locking arrangement.

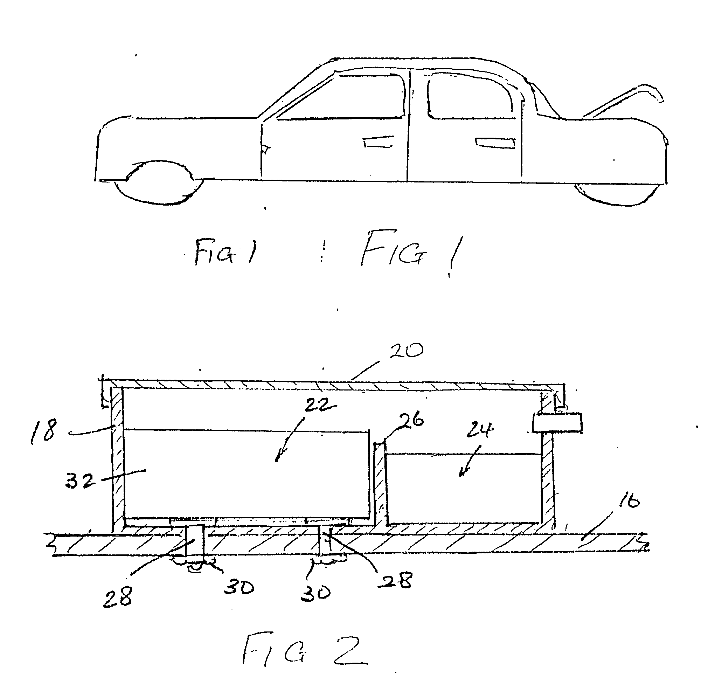

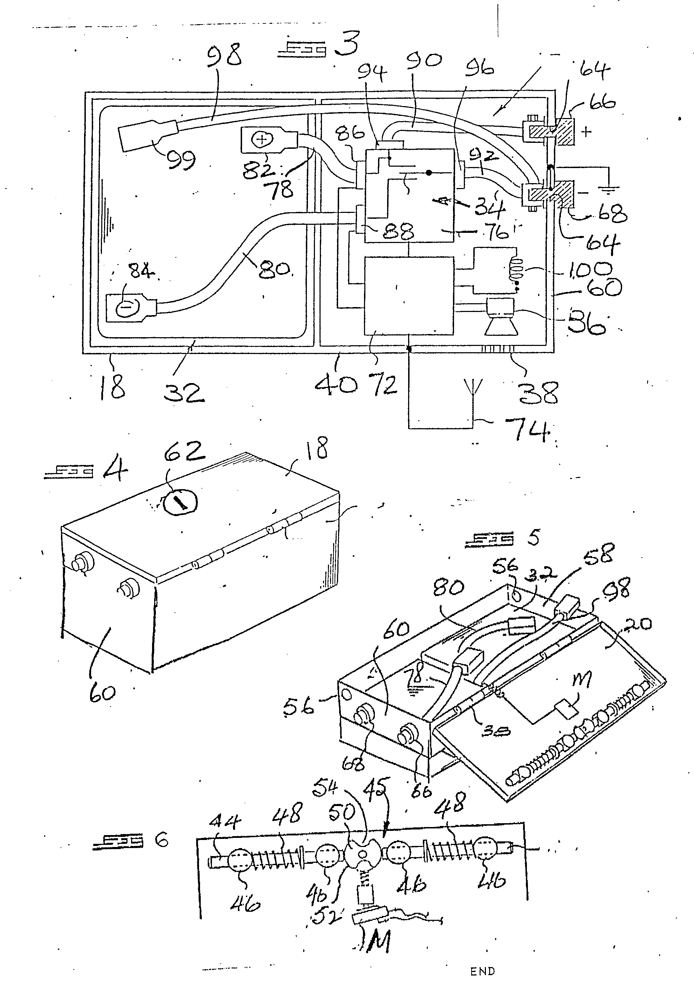

Referring now to Figures 1 to 3, there is shown a motor vehicle 10 having, as is conventional, a body with an engine compartment 12 and a boot (trunk) 14 which is shown with the lid open. On the floor 16 of the boot 14 and at one side of the boot 14 there is a parallelipipedal container 18 made of robust steel plate having a lid 20 of the same material hinged thereto. The container 18 is divided into two compartments 22 and 24 by a low transverse wall 26. The container 18 is secured to the floor 16 of the boot 14 by means of a pair of self tapping screws or bolts 28 that pass through the base of the compartment 22 and the floor 16 below which it receives nuts 30 welded to 16. Thus the container 18 is thus in firm and secure physical and electrical contact with the body of the vehicle 10.

The battery 32 for the motor vehicle 10 fits closely within the main compartment 22 of the container 18. The battery 32 is located directly above the bolts 28 to which access is not possible without removal of the battery. The compartment 24 contains the control equipment 34 and a siren 36. Slots or apertures 38 are cut into a side wall 40 of the container 18 to provide a grid through which sounds emitted by the siren 36 may more easily pass.

The lid 20 is provided with locking means 42. Such locking means comprises a pair of aligned rods 44 that are carried by pin guides 46 and are biassed inwardly by springs 48. The inner ends of the rods 44 engage a rotary cam 50. The cam 50 has lifter portions 52 located diametrically opposite each other and valleys 54 therebetween. When the inner ends of the rods 44 engage the lifter portions 52 i.e. when the cam is in the "locking position") and the lid is in the closed position, the rods 44 will be moved to outer positions in which they pass through openings 56 in the side walls 58 and 60 of the container 18 to lock the lid 18 in the closed position. When the cam 50 is in a position at right angles to the locking position where the inner ends of the rods 44 are moved inwardly by the springs 48 to engage the valleys 54, the rods 44 will be free of the openings 56 so that the lid 20 may be opened for access to the interior of the compartment. A barrel lock 62 in the lid 20 is arranged to rotate the cam 50 between the locking position and an open positions.

A pair of apertures 64 are provided in the side wall 60 remote from the compartment 22 and terminals 66 and 68 are secured therein.

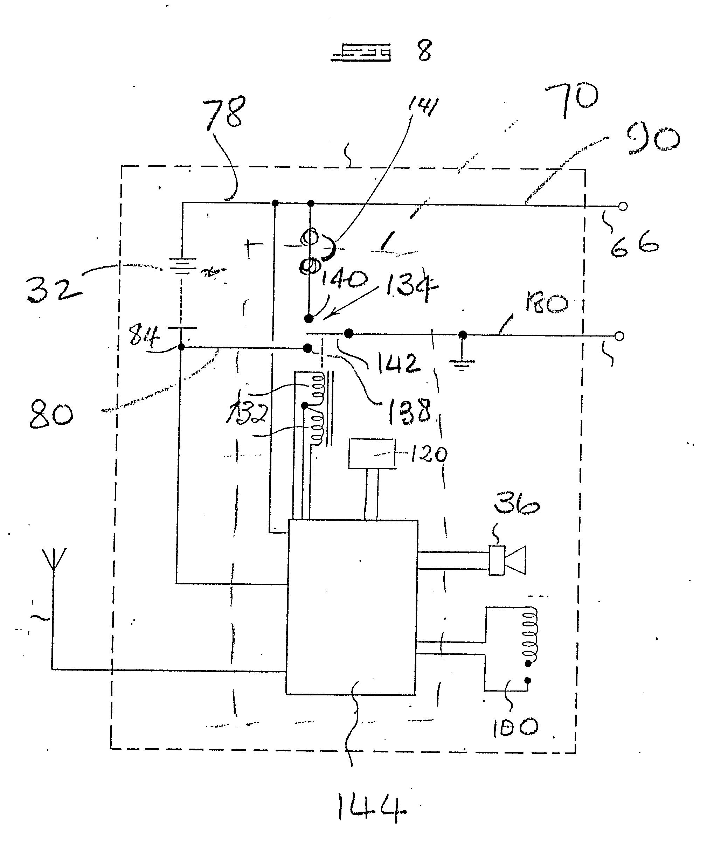

The control equipment 34 is contained in a sealed plastics box 70. It comprises a receiver 72 having a suitable antenna 74 and a switch box 76. Robust electrical connectors or straps 78 and 80 are connected respectively to the positive and negative terminals 82 and 84 of the battery 32 and lead to input terminals 86 and 88 of the switch box 76. Robust straps 90 and 92 (not fully shown in Figure 5) lead respectively from output terminals 94 and 96 of the switch box 76 to the terminals 66 and 68. The negative terminal 68 is connected to the wall 60 of the container 18 and is hence "earthed" to the vehicle body. A by-pass strap 98 has one end also connected to the terminal 68. Its other end 99 lies free under normal conditions but is capable of being connected to the negative terminal 84 of the battery as will be described below.

A pressure sensitive switch 100 is also contained within the box 76. The switch 100 has contacts which close when the switch is subjected to acceleration along a predetermined axis and is arranged and oriented to detect vertical movement of the vehicle or undue lifting of the vehicle as when it is being towed away.

A door trigger switch indicated generally at 102 is provided on the door 104 adjacent the driver's seat. This could be a conventional courtesy light switch. This switch 102 is opened when the door is closed. It is connected to the contents of the switch box 76 as will be described.

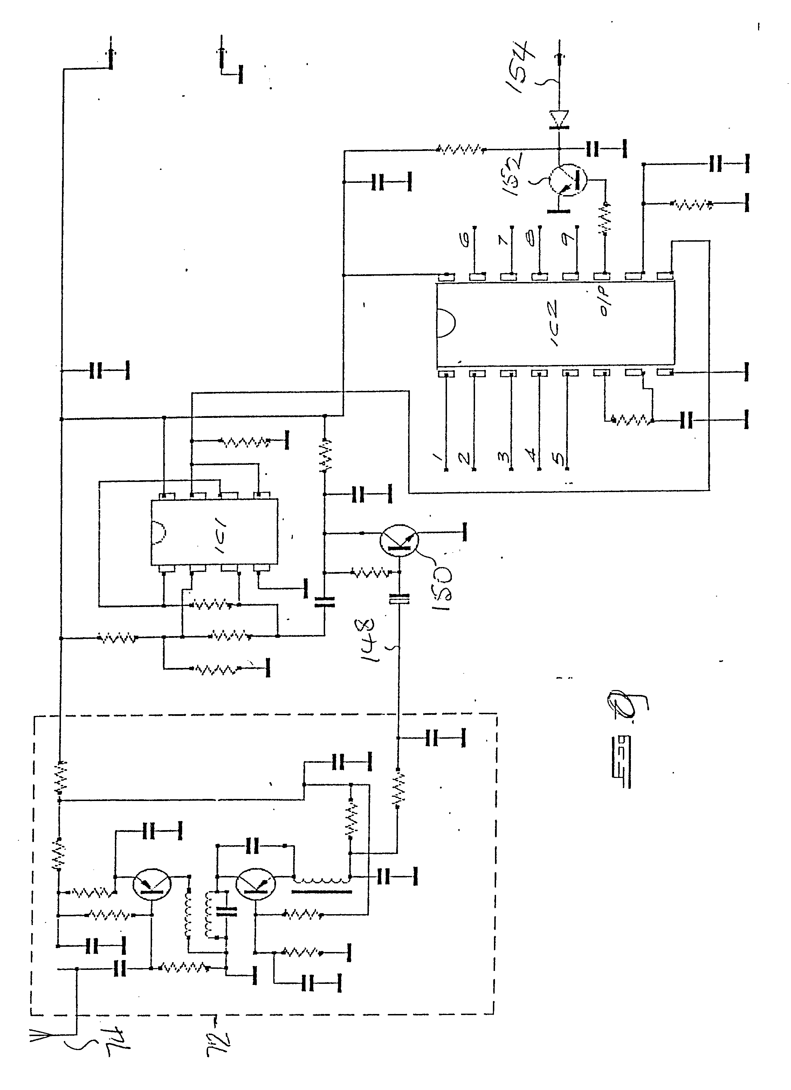

Reference is now made to Figure 7 which is a block diagram of the electrical system of the invention. The system comprises a remote transmitter 106 which is capable of sending a coded signal to the radio frequency stage 72 of the circuit. The RF stage 72 is connected to a decoder 108 which when it detects the appropriate signal code "enables" immobilizer timers 110 to which the RF stage 72 and a door trigger 111 relay circuit 102 is also connected and which is connected to a pulse stretcher 112. The latter is connected to a solenoid relay 114 that is connected to the normally open contact of the vehicle coil 116. The relay 114 is also connected to an automatic/manual override switch 120 and the vehicle's ignition switch 121 to be actuated thereby. The relay 114 is connected to a hooter delay timer 122 that is connected to the siren 36 through a pulser 124. It is also connected to the siren 36 via a trigger 126.

The pulse stretcher 112 is also connected via a second relay 128 to a solenoid control module 130 that acts through solenoid coils 132 to open a heavy current switch 134. The pulse stretcher 112 is also connected direct to the module 130 as is a mode re-set device 136.

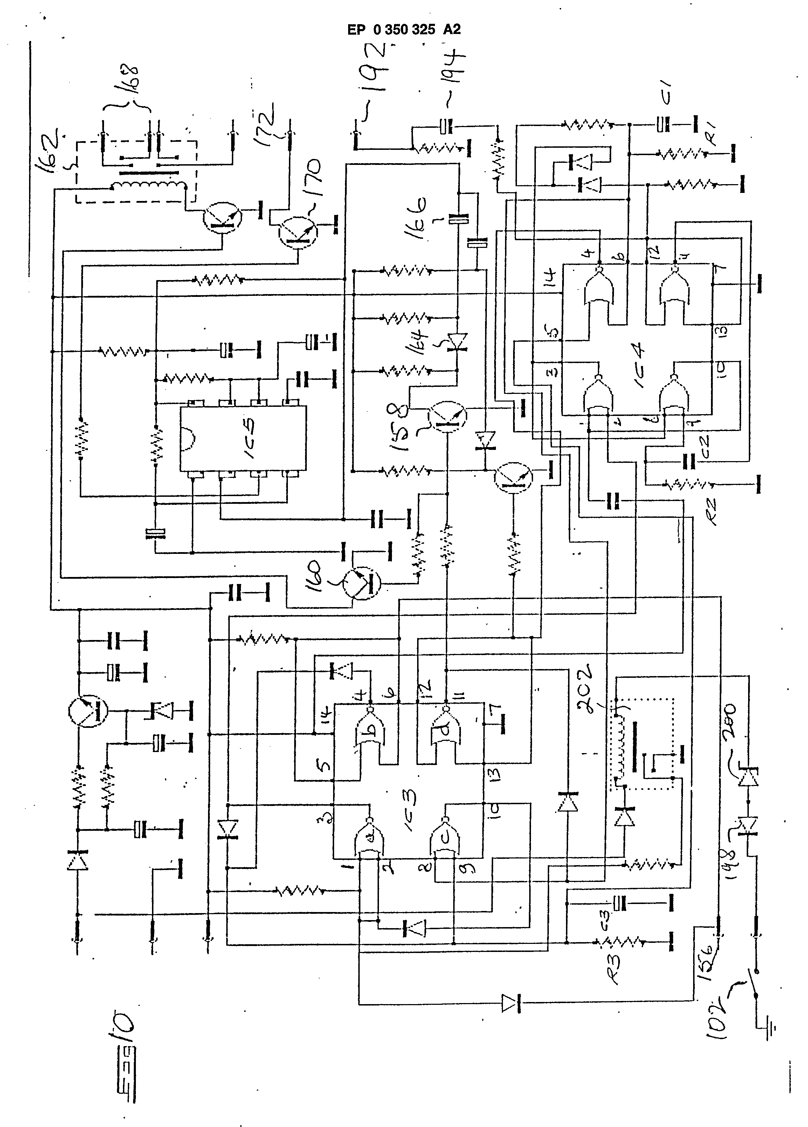

A simplified circuit diagram of the device of the invention is shown in Figure 8. As can be seen the positive terminal of the battery 32 is connected directly to the device terminal 66 via straps 78 and 90. The negative battery terminal 84 is connected via the strap 80 to the heavy duty switch 134 in the unit 76. The switch 134 comprises two terminals 138 and 140 and a contactor 142 that is connected via the strap 92 to the device terminal 66. The terminal 138 is connected to negative battery strap 80 and the terminal 140 is connected a breakable terminal strap 141 to the positive strap 90. The contactor 142 normally contacts terminal 138. When the solenoid coils 132 are actuated, the contactor 142 contacts terminal 140. This has two effects. First the power circuit of the vehicle is interrupted and the vehicle is immobilized. Second there will be polarity reversal at the container terminals 66 and 68. Thus if a thief were to try and override the device of the invention by connecing a new battery to the vehicle electrical cables in the normal way there will be a dead short across that new battery which will very quickly cause irreperable damage to it.

The control means for the device is indicated at 144 in Figure 8 and (in addition to having been shown in the block diagram) is shown in detail in Figures 9 to 12.

Referring to Figure 9 the RF stage 72 is a super regenerative receiver of the kind which is readily available and which is used in other remote-controlled vehicle alarm or anti-theft devices is connected to the simple antenna 74. The transmitter includes an integrated circuit which is set up to define a unique 9 bit code which is output at a clock frequency determined by an RC network. The receiver 72 has an output 148 where an analogue demodulated output appears. This output is fed to a transistor 150 which is configured in a high gain mode and which operates as a pulse shaper to "clean up" the receiver output.

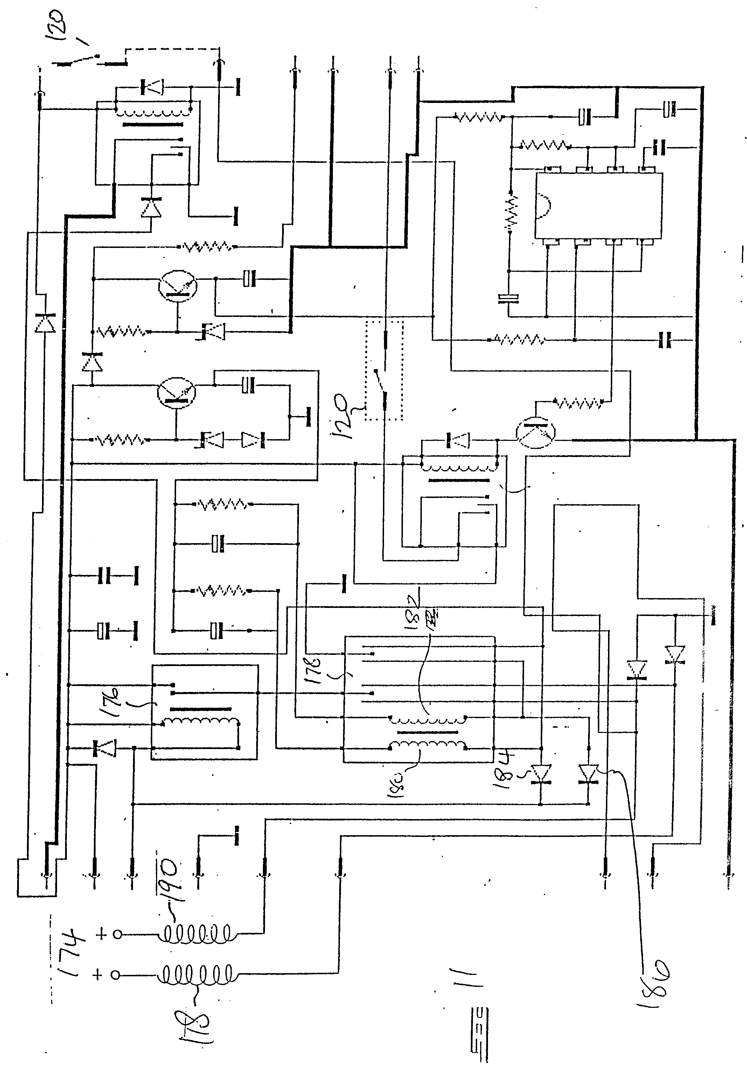

The output of the portable transmitter is a brief pulse train followed by a synchronisation pulse, with a known clock frequency. The output of the receiver 72 is fed to a decoder circuit 108 based around an integrated circuit IC 2, which may be a type MC 145028 chip. The decoder chip has nine code setting inputs which may be set up by means of hardwired links or DIP switches, for example, with a code which matches that of the portable transmitter. The decoder is also set up to run at a clock frequency matching that of the transmitter clock, and it is set to recognise the syunchronisation pulse length of the transmitter. If four correct pulse trains are received by the decoder, it produces an output high at its output pin which is fed to a transistor 152 which inverts the pulse, thus producing a negative going pulse at an output terminal 154. The output terminal 154 is connected to an input terminal 156 of the portion of the circuit shown in Figure 10. The negative growing pulse is fed to pins 5 and 6 of an integrated circuit IC3, which can be a type 4001 CMOS device including 4 NOR gates. This causes pin 4, which is the output of gate b of this chip, to latch high. Similarly, the output of the gate d also goes high. The output of these gates is fed to the inputs of gate b and d of an identical integrated circuit IC4, causing their outputs to latch low. This discharges the RC network formed by a capacitor C1 and a resistor R1, and that formed by a capacitor C2 and a resistor R2. Similarly, the RC network formed by a capacitor C3 and a resistor R3 is discharged. In all three RC networks, the capacitors are initially charged to the voltage of the supply ($V_{cc}$). When the capacitor voltages drop below the half $V_{cc}$, the gates revert to their original state. The time taken for this to happen is determined by the time constant R3 C3 and is selected to be approximately 20 seconds.

During this period, the output of gate d of IC4 turns on a transistor 158 and also a transistor 160 which pulls in a relay 162. The transistor 158 provides a negative going pulse via a diode 164 and a capacitor 166 to the trigger pin (pin 2) of a timer circuit based on an integrated circuit IC5 (typically a 555 timer). The operation of the relay 162 causes a pair of contacts 168 to close for 20 seconds. An output pulse one second long is provided at the output pin (pin 3) of IC5 and is applied to a transistor 170 to provide a buffered 1 second latch pulse at an output 172.

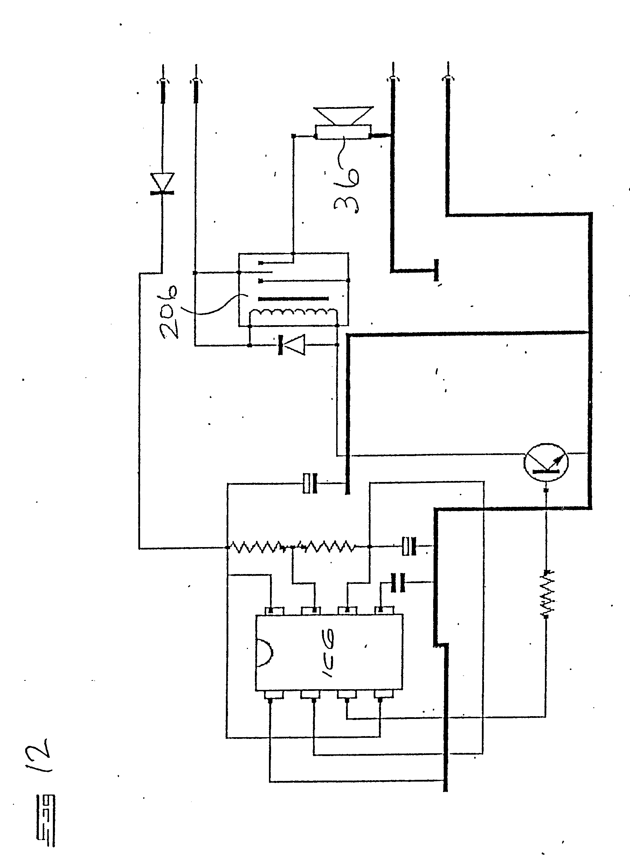

Referring now to Figure 11, the output 172 is fed to an input 174 which feeds the latch pulse to a relay 176, the contacts of which pull in for one second. This applies power from the positive rail of the power supply to the common input terminal of a latching relay 178. At the same time, the pulse from the output of the output 172 (in Figure 10) energises the first coil 180 or the second coil 182 of the latching relay 178 via one of a pair of diodes 184 and 186, depending on the prior state of the latching relay (at any one time, one of the two coils of this relay are shorted out by the auxiliary contacts of the relay). The relay remains in the same state after switching. Depending on which of the coils 180 or 182 is energised, a circuit is completed through one or other of the coils 188 or 190 of the dual solenoid controlled switch 132. Assuming that the vehicle was in an immobilsed state when the system was actuated, the approariate coil of the solenoid operated switch will be actuated to cause the connector to contact the negative terminal of the battery so that the electric circuit of the vehicle will be completed and the vehicle can operate.

After the approximately 20 second time delay referred to above, the gates of IC3 and IC4 revert to their original state. Pin 12 of gate d of IC3 goes high, thus turning on the transistor 159 which applies an inverted pulse via the diode 164 and the capacitor 166 to trigger the timer IC5 for one second. The same procedure as described above occurs, with the relay 176 applying power to the latching relay 178 for one second. The latching relay 178 reverses its condition, and applies power for one second to the other solenoid of the solenoid-operated switch 132, disconnecting the battery negative terminal from the terminal 68 and the vehicle chassis. This would happen, for example, if the portable transmitter was actuated to disable the immobilising function, but no further action was taken within the twenty nine second period. In such a situation, therefore, the device simply resets itself into the immobilised state.

Assuming that the user of the device turns on the vehicle ignition in the 20 second period, a positive voltage will appear at an input terminal 192 in Figure 10. This terminal is connected via a capacitor 194 to pins 12 and 13 of IC4, the capacitor effectively providing a positive going pulse. This causes gate d to change state, which in turn causes gates a and c to latch into a high output state, thereby applying a discharge inhibiting voltage to the RC network of the capacitor C1 and the resistor R1. A latching voltage also appears at pin 2 of IC3, which is applied to the common terminals of the resistor R3 and the capacitor C3 to prevent their discharge. Thus, the sequence described above, following on the discharge of the capacitors, is prevented and the solenoid-controlled switch remains in a state which connects the negative terminal of the vehicle battery to the terminal 68 and to the vehicle chassis.

The normally open door switches 102 (see Figure 10) are effectively connected via a diode 198, a zener diode 200 and an isolating relay 202 to pins 1 and 2 of IC3. This causes pin 3, the output of gate a to go low. A series capacitor (now shown) can be included to ensure that a high-going pulse is provided when the door is opened, even if the door is not closed again or if the contacts of the switch 102 are dirty. When pin 3 of IC3 goes low, pin 3 of IC4 also goes low (as described above) so that the discharge inhibiting voltage is removed from the capacitors C1 and C3. Consequently, after a delay of 20 seconds, the vehicle is once again immobilised. Similarly, turning off the vehicle ignition, exiting the car and closing the door will cause the vehicle to be immobilised automatically after a 20 second delay.

Assuming that the vehicle is operating, with the ignition on, operation of the portable transmitter will cause input pulses from the receiver/decoder ouput to be passed to IC3, once again starting the time delay sequence and immobilising the vehicle after a 20 second delay. This provides an anti-hijack feature. The auto/manual switch 120 is provided (see Figures 3 and 11) which controls the supply of power to the hooter or siren control circuit shown in Figure 12. This switch which is in the centre of the module 34 is used if, for some reason, it is necessary to bypass the anti-theft device entirely. At the same time the strap 80 is disconnected from the battery terminal 84 and the by-pass strap 98 is connected direct to the battery terminal 84. Also the link 141 is opened so that the positive terminal 82 will no longer be connected to the container terminal 66. It will be appreciated that this by-pass arrangement can only be effected if the lock 62 is operated and the lid 20 is opened.

The circuit in Figure 12 is based around a 555 timer, IC6, which operates in an a-stable mode and applies pulses of a predetermined duration to the coil of a relay 206, which controls the supply of current to a hooter or siren 36. Unauthorised attempts to open the container, or movement of the vehicle which is suficient to actuate the sensor 100, result in power being supplied to the hooter/siren control circuit via a relay 206.

The anti-theft device described above has numerous advantages. Firstly, the physical strength of the container 18 makes access to te electronic circuitry of the device very difficult. the device is designed physically in such a way that opening the container or removing it from the vehicle would be difficult and time consuming. All the circuitry of the system is located within the container, so that there are no weak links in the device which are vulnerable to attack by a thief. The device is powered by the vehicle batttery, and no other power source is needed. The switch 134 controlling the battery output is located within the container as is the siren and can thus not be bypassed.

A thief wishing to steal a vehicle equipped with the device will have to provide his own battery, and totally disconnect the anti-theft device from the battery leads of the vehicle, otherwise the polarity reversal feature of the anti-theft device will cause him to damage his own battery and possibly the vehicle electrical circuit. This can be made even more difficult by providing special purpose auxilliary connectors instead of the conventional style terminals 106 and 68; on the exterior surface of the container 18. For example, armoured cables can be provided which are connected to the vehicle electrical system in an inaccessible place. This would increase the amount of work necessary to steal the vehicle to such an extent that most thieves would abandon the attempt.

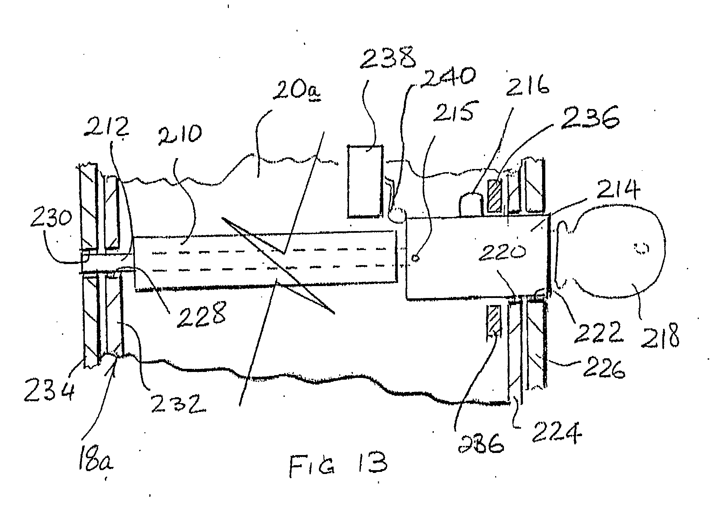

Referring now to Figure 13, there is shown a modified locking arrangement for locking the lid 20a of the container 18a in the closed position. Welded to the underside of the lid 20 and extending transversely thereof is a robust square section steel tube 210. Slidably received within the tube 210 is a rod 212. At one end the rod 212 has an enlarged lock housing 214 connected thereto by means of a pin 215 so as to be slightly pivotable relative thereto. This housing 214 has a projecting tongue 216 which is withdrawn by use of a key 218 in the usual manner. The housing 214 passes through a pair of enlarged apertures 220 and 222 respectively in the wall 224 of the container 18a and the rim 226 of the lid from the latter of which it projects by a few millimetres. The other end of the rod 212 passes closely through smaller apertures 228 and 230 in the opposite wall 232 and rim 234 of the lid. The inner end of the housing 214 is spaced by about one or two millimetres from the end of the tube 210. A pair of robust stops 236 are welded to the lid 20a and the tongue 216 butts thereagainst. It will be seen that the movement of the rod 212 towards the wall 228 will be prevented by the housing 214 butting against the tube 210 and movement in the other direction is prevented by the tongue 216 engaging one or other of the stops 236.

A microswitch 238 is mounted on the underside of the lid 20a with its feeler 240 engaging the inner end of the housing 214 and lightly biasing it outwardly. This microswitch 232 is connected to the circuitry so that when actuated, it will actuate the alarm siren. The circuitry can be disabled on use of the transmitter.

Thus if an unauthorised person tries to open the lock by inserting the key into the barrel, the rod 212 will be moved backwardly so that the microswitch 238 will be actuated, activating the alarm.

The locking arrangement can also be located longitudinally of the lid if it is so desired.

A microswitch arrangement M connected to the circuitry in similar manner can also be attached to the underside of lid 20 (as shown in Figure 6) to be actuated by the cam 50 when an attempt is made to rotate it.

Attempts to open or interfere with the container 18 will result in the setting off of an alarm which is protected by the container itself, and which thus cannot be shut off.

The invention is not limited to the precise constructional details hereinbefore described and illustrated in the drawings. For example, the container may comprise any other robust metallic material. It may be welded or otherwise secured in position in, and in electrical contact with, the vehicle body. The container can be located in the vehicle in the position where the battery is normally contained, e.g. in the engine compartment.

The anti-theft device may be used in any other vehicle which utilises a battery for operation, e.g. a truck or waterborne vehicle or indeed with suitable modification in any other battery operated device where there is a danger of interference.

A dust or similar cover may be provided above the lock on the lid 18 and this may be connected in any convenient way e.g. by having a pin depending therefrom and passing through the lid to engage a microswitch so that any attempt to reach the lock without first disabling the circuitry will have the effect of activating the alarm.

**Claims**

1. A motor vehicle anti-theft device comprising a lockable container adapted to contain the battery of the motor vehicle and to be fixed to the vehicle; first and second auxiliary connector means accessible from the exterior of the container; a first lead for connecting the positive terminal of the battery to the first auxiliary connector means; controllable switch means; a second lead for connecting the negative terminal of the battery via the switch means to the second auxiliary connector means, so that electrical continuity between the negative terminal of the battery and the second auxiliary connector means can be controlled by the switch means; and a control circuit arranged to be powered by the battery and responsive to signals from control means external to the container to control the switch means selectively to enable or disable operation of the vehicle.

2. A motor vehicle anti-theft device according to claim 1 wherein polarity reversal means is provided to connect the positive terminal of the battery to the second auxiliary connector means when the negative terminal of the battery is disconnected therefrom.

3. A motor vehicle anti-theft device according to claim 2 wherein the switch means is a switch arranged to connect either the positive or the negative terminal of the battery to the second auxiliary connector means depending on the switch position.

4. A motor vehicle anti-theft device according to claim 2 or claim 3 wherein the second auxiliary connector means is connected electrically to the chassis of the vehicle.

5. A motor vehicle anti-theft device according to claim 4 wherein at least a portion of the container is electrically conductive and is connected electrically both to the chassis of the vehicle and to the second auxiliary connector means.

6. A motor vehicle anti-theft device according to any one of claims 1 to 5 wherein the container is secured to the vehicle by means of fasteners which are removable only from within the container.

7. A motor vehicle anti-theft device according to any one of claims 1 to 6 wherein the container has a panel which is openable to provide access to the vehicle battery, the panel being lockable in a closed position by locking means.

8. A motor vehicle anti-theft device according to claim 7 or claim 8 wherein an alarm sensor is located within the container to detect unauthorised attempts to open the container.

9. A motor vehicle anti-theft device according to claim 8 wherein an audible alarm device such as a siren is located within the container and is arranged to be actuated by an unauthorised attempt to open the container, the alarm device being powered by the vehicle battery and a path being defined by the container to allow sound generated by the alarm device to escape from the container.

10. A motor vehicle anti-theft device according to any one of claims 1 to 9 wherein a sensor is located within the container which is responsive to changes in orientation of the vehicle, to detect unauthorised attempts to move the vehicle.

11. A motor vehicle anti-theft device according to any one of claims 1 to 10 wherein the switch means is a latching solenoid-operated switch having first and second coils, energisation of either coil causing the switch to latch into a respective first or second position.

12. A motor vehicle anti-theft device according to claim 11 wherein current is supplied to the first or second coil of the switch means via respective contacts of a latching relay which is actuated for a predetermined period by the control circuit.

13. A motor vehicle anti-theft device according to any one of claims 1 to 12 wherein the container houses the circuitry of a burglar alarm, anti-hijacking device, or a further vehicle immobilising device, each of which is arranged to be powered by the vehicle battery.

Fig 1 : FIG 1

FIG 2

FIG 3

FIG 4

FIG 5

FIG 6

END

FIG 7

EP 0 350 325 A2

EP 0 350 325 A2

FIG. 8

EP 0 350 325 A2

FIG. 9

EP 0 350 325 A2

EP 0 350 325 A2

Fig. 12

36

206

IC6

FIG 13